# EUROPÄISCHE PATENTSCHRIFT

(11) **EP 1 038 851 B1**
(45) Veröffentlichungstag und Bekanntmachung des Hinweises auf die Patenterteilung: **09.05.2001**
(21) Anmeldenummer: 99103847.2
(22) Anmeldetag: 27.02.1999
(51) Int. Cl.: C04B 2/12, F27B 1/02

(54) **Verfahren zum Brennen von stückigem Brenngut, insbesondere von Kalkstein, Dolomit und Magnesit, und Regenerativschachtofen zur Durchführung des Verfahrens**
Process for firing a lumpy, burnable charge expecially limestone, dolomite and magnesite, and a regenerative shaft furnace for carrying out the process
Procédé pour calciner une charge calcinable en morceaux, spécialement calcaire, dolomite et magnesite, et four à couve à régénération pour mettre à exécution le procédé

(43) Veröffentlichungstag der Anmeldung: 27.09.2000
(73) Patentinhaber: Zeisel, Peter Dipl.-Ing., 44791 Bochum (DE)
(72) Erfinder: Zeisel, Peter Dipl.-Ing., 44791 Bochum (DE)
(74) Vertreter: Albrecht, Rainer Harald, Dr.-Ing.

(56) Entgegenhaltungen:
- EP-A- 0 141 198
- CH-A- 345 635
- FR-A- 2 436 346
- FR-A- 2 523 569
- US-A- 4 534 731
- US-A- 5 460 517

## Beschreibung

Die Erfindung betrifft ein Verfahren zum Brennen von stückigem Brenngut, insbesondere von Kalkstein, Dolomit und Magnesit, in einem Regenerativschachtofen aus mindestens zwei Schächten, die eine Vorwärmzone sowie eine Brennzone aufweisen und oberhalb einer Kühlzone durch einen Überströmkanal verbunden sind, wobei
Verbrennungsluft am Kopf eines Schachtes aufgegeben, bei der Durchströmung der Vorwärmzone von heißem Brenngut erwärmt und vor Eintritt in die Brennzone mit Brennstoff zusammengebracht wird,
die Brennzone des Schachtes von Verbrennungsgas, das bei der Verbrennung des Brennstoffes entsteht, durchströmt wird,
Verbrennungsgas durch den Überströmkanal in den Parallelschacht geleitet wird und diesen von unten nach oben unter Wärmeabgabe an das im Parallelschacht befindliche Brenngut durchströmt und
Kühlluft am unteren Ende des Schachtes zugeführt und bei der Durchströmung der Kühlzone von heißem, die Brennzone verlassenden Brenngut erwärmt wird.

Bei dem aus DE-Z: ZEMENT-KALK-GIPS, Nr. 6, 1970, Seiten 277 bis 284, bekannten Verfahren, das aufgrund seines geringen Energiebedarfes in der Praxis erhebliche Verbreitung gefunden hat, wird der Brennstoff den Schächten über Lanzen, die in der Schüttung hängen, oder in Hohlräumen unterhalb feuerfester Brücken, die am Ende der Vorwärmzone im Schacht angeordnet sind, aufgegeben. Die Vorwärmzone der Schächte wird als Regenerator genutzt. Die Verbrennungsluft wird am oberen Ende eines Schachtes zugeführt, strömt im Gleichstrom durch die Vorwärmzone, erwärmt sich hier an der heißen Schüttung des Brenngutes und trifft an den Lanzenmündungen auf den Brennstoff. Es kommt zu einer Verbrennung. Das Verbrennungsgas strömt im Gleichstrom von den Lanzenmündungen zum Überströmkanal und gelangt in den Parallelschacht. Hier strömt das Verbrennungsgas im Gegenstrom zur Bewegungsrichtung des Brenngutes zur Vorwärmzone, in der es Überschußwärme an das in den Parallelschacht aufgegebene Brenngut abgibt. Anschließend wird das Abgas am Kopf des Parallelschachtes abgezogen und einer Entstaubung zugeführt. In festgelegten Zeitabständen, in der Praxis zumeist nach etwa 10 bis 15 Minuten, werden die Verbrennungsluftzuführung, die Abgasabführung und die Brennstoffzuführung umgeschaltet. Die Verbrennungsluft und der Brennstoff werden dann dem Parallelschacht zugeführt, und das Abgas wird an der Oberseite des ersten Schachtes abgezogen.

Bei dem bekannten Verfahren nimmt die Kühlluft, die an der Unterseite der Kühlzonen beider Schächte aufgegeben wird, am Verbrennungsprozeß nicht teil. Die Kühlluft erwärmt sich bei der Durchströmung der Kühlzone und wird dem in den Parallelschacht eingeleiteten Verbrennungsgas zugemischt. Die Kühlluft vergrößert den Abgasmengenstrom, der an der Oberseite des Parallelschachtes abgezogen wird, und hat überdies einen Verdünnungseffekt. Die zugemischte Kühlluft bewirkt, daß der CO₂-Gehalt des Abgasstromes nur etwa 20 bis 22 Vol.-% beträgt.

Gasströme mit einem hohen CO₂-Gehalt sind als Wertstoff, z.B. bei der Karbonatherstellung, nutzbar. In der Zucker- und Soda-Industrie sowie bei der Kalziumpräzipitatherstellung werden Gasströme mit einem CO₂-Gehalt von mindestens 30 Vol.-% benötigt. Für diese Anwendungen ist das Abgas, das beim Brennen von Kalkstein, Dolomit u. dgl. in einem Regenerativschachtofen anfällt, nicht geeignet.

Der Erfindung liegt die Aufgabe zugrunde, das eingangs beschriebene Verfahren so weiter auszubilden, daß die Luftmenge flexibel steuerbar ist und insbesondere auch so eingestellt werden kann, daß das beim Brennen von Kalkstein, Dolomit u. dgl. anfallende Abgas einen CO₂-Gehalt von mehr als 30 Vol.-% aufweist. Der Wärmebedarf des Regenerativschachtofens soll sich dabei nicht erhöhen.

Ausgehend von dem eingangs beschriebenen Verfahren wird die Aufgabe erfindungsgemäß dadurch gelöst, daß die in der Vorwärmzone erwärmte Verbrennungsluft und zumindest ein Teilstrom der in der Kühlzone erwärmten Kühlluft aus dem Schacht abgezogen und mit Brennstoff einer Brennkammer zugeführt werden, in der das Verbrennungsgas für die Brennzone erzeugt wird. Ein sehr hoher CO₂-Gehalt des aus dem Regenerativschachtofen abgezogenen Abgases ist erreichbar, wenn die gesamte Kühlluft der Brennkammer zugeführt und als Oxidationsmittel für den Brennstoff verwendet wird.

Vorzugsweise werden mit einem vorgewärmten Treibgas betriebene Injektoren verwendet, um die erwärmte Verbrennungsluft und die erwärmte Kühlluft aus dem Schacht abzusaugen und der Brennkammer zuzuführen. Das Treibmedium wird zweckmäßig in einer zentralen Brennkammer oder in dezentral angeordneten Brennkammern auf etwa 800 bis 1.000 °C vorgewärmt. Die an den Schacht angeschlossene Brennkammer zur Erzeugung des in der Brennzone benötigten Verbrennungsgases ist jeweils mit einem Brenner oder mit einer kleinen Anzahl von Brennern, vorzugsweise zwei Brennern, ausgerüstet, was die Brennstoffzuführung vereinfacht. Die Temperatur in der Brennkammer wird durch den am oberen Ende der Kühlzone abgesaugten Gasstrom geregelt. Die Nutzung der Kühlluft zur Verbrennung hat den Vorteil, daß das Luftverhältnis des Regenerativschachtofens einstell- und veränderbar ist. Luftverhältnis bezeichnet hier die dem Regenerativschachtofen insgesamt als Kühlluft und Verbrennungsluft zugeführte Luftmenge, bezogen auf die für eine stöchiometrische Verbrennung des Brennstoffes benötigte Mindestluftmenge. Bei einem im wesentlichen vorgegebenen Kühlluftmengenstrom kann die der Vorwärmzone zugeführte Verbrennungsluftmenge so eingestellt werden, daß das Luftverhältnis λ kleiner ist als 1,3. Bei einem Luftverhältnis λ = 1,2 stellt sich im Abgas des erfindungsgemäß betriebenen Regenerativschachtofens bei Erdgasfeuerung und Aufgabe eines Kalksteins mit einem CaCO₃-Gehalt von ca. 98 Gew.-% und einem Rest-CO₂-Gehalt im Kalk von ca. 1 Gew.-% ein CO₂-Gehalt im Abgas von ca. 34 Vol.-% ein. Der Wärmebedarf des Ofens beträgt ca. 3.478 kJ/kg Kalk.

Durch die Anordnung der Brennkammer und durch die Positionierung der Absaugöffnungen für die Kühlluft können Gleichstrom- und Gegenstrom-Brennzonen festgelegt werden. In der Gleichstrom-Brennzone wird das Verbrennungsgas in der Bewegungsrichtung des Brenngutes, in der Gegenstrom-Brennzone entgegen der Bewegungsrichtung des Brenngutes geführt. Durch Veränderung des Verhältnisses von Gleichstrom- und Gegenstrom-Brennzone kann der Brennvorgang beeinflußt und kann der Reaktivität des Brenngutes Rechnung getragen werden. Insofern ergeben sich durch das erfindungsgemäße Verfahren weitere Variationsmöglichkeiten.

Eine Ausführungsform des erfindungsgemäßen Verfahrens sieht vor, daß das Verbrennungsgas oberhalb des Überströmkanals in den Schacht eingeleitet wird und eine Brennzone durchströmt, die von der an den Schacht angeschlossenen Brennkammer bis zum Überströmkanal reicht. Die Brennzone des Schachtes arbeitet als Gleichstrom-Brennzone, während die Brennzone des parallelen Schachtes von dem Verbrennungsgas im Gegenstrom zur Bewegungsrichtung des Brenngutes durchströmt wird.

Gemäß einer weiteren Ausführung des erfindungsgemäßen Verfahrens wird das Verbrennungsgas etwa auf der Höhe des Überströmkanals eingeleitet. Ein Verbrennungsgasteilstrom durchströmt eine Brennzone des Schachtes unterhalb des Überströmkanals im Gleichstrom zur Bewegungsrichtung des Brenngutes und wird mit der in der Kühlzone erwärmten Kühlluft unterhalb des Überströmkanals aus dem Schacht abgezogen und in die Brennkammer zurückgeführt. Der andere Teil des Verbrennungsgases gelangt durch den Überströmkanal in den Parallelschacht und durchströmt dessen Brennzone im Gegenstrom zur Bewegungsrichtung des Brenngutes. Bei dieser Verfahrensführung wird das Brenngut in einer kurzen Gleichstrom-Brennzone zwischen Brennkammer und der unterhalb des Überströmkanals angeordneten Absaugöffnung gebrannt. Der überwiegende Teil des Brennvorganges erfolgt jedoch in der Gegenstrom-Brennzone des Parallelschachtes.

Eine weitere Variationsmöglichkeit des erfindungsgemäßen Verfahrens besteht darin, daß beide Schächte mit Brennkammern ausgerüstet sind, die etwa auf der Höhe des Überströmkanals an den Schacht angeschlossen sind und gleichzeitig mit Brennstoff sowie jeweils einem Teilstrom der in der Vorwärmzone des ersten Schachtes erwärmten Verbrennungsluft beaufschlagt werden. Ein Teil der aus den Brennkammern in die Schächte eingeleiteten Verbrennungsgase durchströmt eine Gleichstrom-Brennzone des betreffenden Schachtes unterhalb des Überströmkanals im Gleichstrom zur Bewegungsrichtung des Brenngutes und wird mit einem in der Kühlzone erwärmten Kühlluftstrom unterhalb des Überströmkanals aus dem Schacht abgezogen und in die an den Schacht angeschlossene Brennkammer zurückgeführt. Der andere Teil des Verbrennungsgases durchströmt eine Gegenstrom-Brennzone des zweiten Schachtes im Gegenstrom zur Bewegungsrichtung des Brenngutes. Bei dieser Ausführung des erfindungsgemäßen Verfahrens wird das Brenngut in beiden Schächten gleichzeitig im Gleichstrom gebrannt. Ferner ist in dem Schacht, aus dem das Abgas oberseitig abgeführt wird, eine Gegenstrom-Brennzone vorhanden, in der das Brenngut durch von unten nach oben geführtes Verbrennungsgas gebrannt wird.

Die beschriebene Aufteilung in zwei Gleichstrom-Brennzonen und eine Gegenstrom-Brennzone ist auch erreichbar, wenn die in der Vorwärmzone des ersten Schachtes erwärmte Verbrennungsluft mit Brennstoff einer Brennkammer zugeführt wird, die an den Überströmkanal angeschlossen ist. Ein Teil des aus der Brennkammer austretenden Verbrennungsgases durchströmt in beiden Schächten eine Gleichstrom-Brennzone unterhalb des Überströmkanals im Gleichstrom zur Bewegungsrichtung des Brenngutes und wird mit einem in der Kühlzone erwärmten Kühlluftstrom unterhalb des Überströmkanals aus den Schächten abgezogen und in die Brennkammer zurückgeführt. Der andere Teil des Verbrennungsgases durchströmt eine Gegenstrom-Brennzone des zweiten Schachtes im Gegenstrom zur Bewegungsrichtung des Brenngutes.

Gegenstand der Erfindung ist auch ein Regenerativschachtofen gemäß den Ansprüchen 9 bis 14 zur Durchführung des beschriebenen Verfahrens.

Im folgenden wird die Erfindung anhand einer lediglich ein Ausführungsbeispiel darstellenden Zeichnung erläutert. Es zeigen schematisch
- Fig. 1: eine Anlage mit einem Regenerativschachtofen zum Brennen von stückigem Brenngut, insbesondere von Kalkstein, Dolomit, Magnesit u. dgl.,
- Fig. 2 bis 5: weitere Ausführungen des erfindungsgemäßen Regenerativschachtofens.

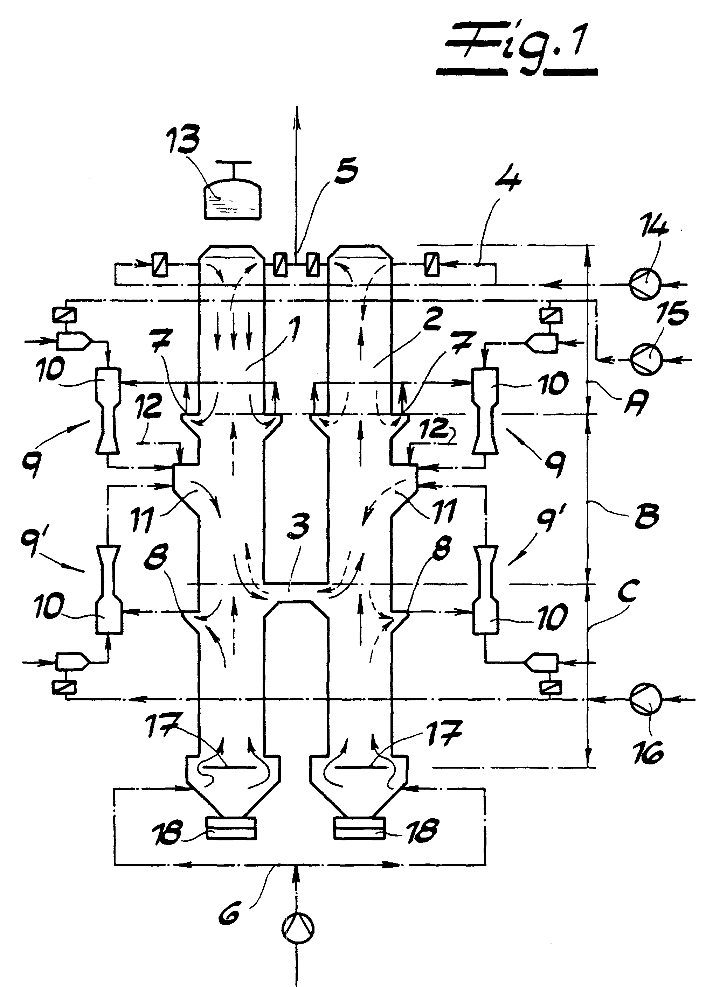

Der Regenerativschachtofen der in Fig. 1 dargestellten Anlage umfaßt zwei Schächte 1, 2, die jeweils eine Vorwärmzone A, eine von heißem Verbrennungsgas durchströmte Brennzone B und eine Kühlzone C aufweisen und oberhalb der Kühlzone C durch einen Überströmkanal 3 verbunden sind. Oberhalb der Vorwärmzone A beider Schächte 1, 2 sind wechselweise schaltbare Einrichtungen 4, 5 für die Zuführung von Verbrennungsluft und den Abzug von Abgas vorgesehen. Unterhalb der Kühlzone C beider Schächte 1, 2 sind Einrichtungen 6 für die Zuführung von Kühlluft angeschlossen.

Die Schächte 1, 2 weisen am unteren Ende der Vorwärmzone A und am oberen Ende der Kühlzone C Gasaustrittsöffnungen 7, 8 auf, an die Absaugeinrichtungen 9, 9' angeschlossen sind. Die Absaugeinrichtungen 9, 9' arbeiten mit Injektoren 10, die mit vorgewärmter Treibluft gespeist sind, und verbinden die Gasaustrittsöffnungen 7, 8 des Schachtes 1 bzw. 2 mit einer an den Schacht angeschlossenen Brennkammer 11, die vorzugsweise mit zwei Brennern ausgerüstet ist. Gasförmiger, flüssiger oder fester Brennstoff wird über eine Brennstoffleitung 12 zugeführt. Bei der Verbrennung entstehendes Verbrennungsgas wird in die Brennzone B des Schachtes 1 oder 2 eingeleitet.

Der Regenerativschachtofen kann im Saugzug- oder Druckbetrieb arbeiten, so daß je nach Arbeitsweise in den Schächten 1, 2 Unterdruck oder Überdruck herrscht. Im Ausführungsbeispiel ist ein Druckbetrieb vorgesehen, d.h., alle Luftströme werden durch Druckgebläse zugeführt. Die Befeuerung der Schächte 1, 2 wird periodisch, also in bestimmten einstellbaren Zeitintervallen, von dem Schacht 1 auf den Schacht 2 und umgekehrt umgeschaltet. Während der Umschaltpausen werden die Schächte 1, 2 durch übliche Beschickungseinrichtungen, z.B. mittels Kübeln 13, mit Brenngut beschickt.

Die Fig. 1 zeigt mit durchgezogenen Richtungspfeilen die Luftführung, wenn das Verbrennungsgas am Kopf des Schachtes 1 aufgegeben und das Abgas am Kopf des Schachtes 2 abgezogen wird. Mittels eines Gebläses 14 wird Verbrennungsluft über eine Rohrleitung und eine offene Klappe in den Kopf des Schachtes 1 gedrückt. Die Zuführungsleitung am Ofenkopf des Schachtes 2 ist durch eine Klappe geschlossen. Die in den Schacht 1 eingeleitete Luft strömt durch die Brenngutschüttung in der Vorwärmzone A nach unten und erwärmt sich hierbei auf ca. 700 bis 800 °C. Von der Absaugeinrichtung 9 wird die erwärmte Verbrennungsluft aus dem Schacht 1 abgesaugt und in die Brennkammer 11 eingespeist. Die Absaugeinrichtung 9 weist einen Injektor 10 auf, der mit einem vorgewärmten Luftstrom als Treibmedium gespeist wird. Die Treibmittelzuführung erfolgt durch ein Gebläse 15. Das Treibmittel gelangt über eine Rohrleitung in eine zentrale Brennkammer oder in dezentral angeordnete Brennkammern, wo es mit Brennstoff auf Temperaturen von 800 bis 1.000 °C vorgewärmt wird. In der Zuführleitung sind Absperrklappen vorgesehen, die im Wechsel geöffnet und geschlossen werden.

Die unterseitig in die Kühlzone C des Schachtes 1 eingespeiste Kühlluft erwärmt sich bei der Durchströmung der Kühlzone C. Sie wird allein oder zusammen mit Gleichstromgas mittels der Absaugeinrichtung 9' aus dem Schacht 1 abgesaugt und in die Brennkammer 11 gedrückt. Die Absaugeinrichtung 9' ist ebenfalls mit einem Injektor 10 ausgerüstet, der mit einem vorgewärmten Treibmedium gespeist wird. Die Zuführung des Treibmittels erfolgt mit einem Gebläse 16. Das Treibmedium gelangt über eine Rohrleitung und eine geöffnete Klappe in eine Brennkammer, wo es mit Brennstoff auf 800 bis 1.000 °C zentral oder dezentral vorgewärmt wird.

Die Temperatur der Brennkammer 11 kann über die vom Injektor 10 in die Brennkammer geförderte Umwälzgasmenge, bestehend aus Kühlluft und Gleichstromgas, geregelt werden. Alle in den Schacht 1 eingeblasenen Luftströme, das in der Brennzone B aus dem Brenngut entweichende CO₂ und das Verbrennungsgas, welches bei der Verbrennung in der Brennkammer 11 entsteht, gelangen durch den Überströmkanal 3 in den Parallelschacht 2, in welchem sie im Gegenstrom zum Brenngut zum Kopf des Parallelschachtes 2 strömen. In der Brennzone B des Parallelschachtes 2 geben die Gase Wärme im Gegenstrom an das entsäuernde Brenngut ab. In der Vorwärmzone A des Parallelschachtes 2 wird die im Abgas enthaltene überschüssige Wärme vom Brenngut gespeichert. Durch eine geöffnete Klappe am Ofenkopf und eine Rohrleitung strömt das Abgas mit einer Temperatur von ca. 100 °C zu einer nicht dargestellten Entstaubungseinrichtung.

Das fertig gebrannte Brenngut wird von Austragseinrichtungen 17 in darunterliegende Silos und über Schleusen 18 aus dem Regenerativschachtofen ausgetragen. Nach Ablauf der einstellbaren Brennzeit, der sogenannten Brennperiode, wird die Brennstoffzufuhr zum Schacht 1 abgeschaltet und wird der Schacht 2 zum Brennschacht. Die sich dann in den Schächten einstellende Gasströmung ist durch gestrichelte Richtungspfeile dargestellt.

Im Ausführungsbeispiel der Fig. 1 weisen beide Schächte 1, 2 eine Brennkammer 11 auf, die oberhalb des Überströmkanals 3 am Umfang der Schächte 1, 2 angeordnet ist. Das oberhalb des Überströmkanals 3 in den Schacht 1 oder 2 eingeleitete Verbrennungsgas durchströmt eine Gleichstrom-Brennzone B, die von der an den Schacht angeschlossenen Brennkammer 11 bis zum Überströmkanal 3 reicht. Die Brennzone B des Parallelschachtes 2 arbeitet hingegen als Gegenstrom-Brennzone.

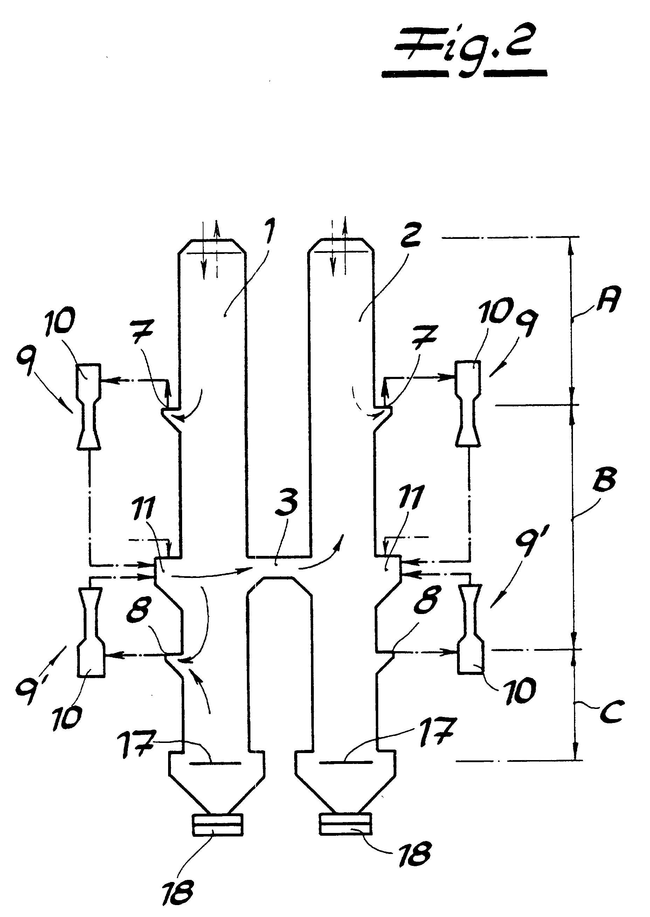

Im Ausführungsbeispiel der Fig. 2 weisen beide Schächte 1, 2 eine Brennkammer 11 auf, die etwa auf der Höhe des Überströmkanals 3 am Umfang der Schächte 1, 2 angeordnet sind und durch die Absaugeinrichtungen 9, 9' mit oberhalb und unterhalb des Überströmkanals angeordneten Gasaustrittsöffnungen 7, 8 der Schächte 1, 2 verbunden sind. Ein Verbrennungsgasteilstrom durchströmt eine Brennzone B des Schachtes 1 unterhalb des Überströmkanals 3 im Gleichstrom zur Bewegungsrichtung des Brenngutes und wird mit der in der Kühlzone C erwärmten Kühlluft unterhalb des Überströmkanals 3 aus dem Schacht 1 abgezogen und in die Brennkammer 11 zurückgeführt. Der andere Teil des Verbrennungsgases gelangt durch den Überströmkanal 3 in den Parallelschacht 2 und durchströmt die Brennzone B des Parallelschachtes 2 im Gegenstrom zur Bewegungsrichtung des Brenngutes. Die Gleichstrom-Brennzone ist kürzer als die Gegenstrom-Brennzone. Durch die Festlegung des Gleichstrom- und Gegenstromanteils kann der Brennvorgang beeinflußt und kann auf die Reaktivität des Brenngutes Rücksicht genommen werden.

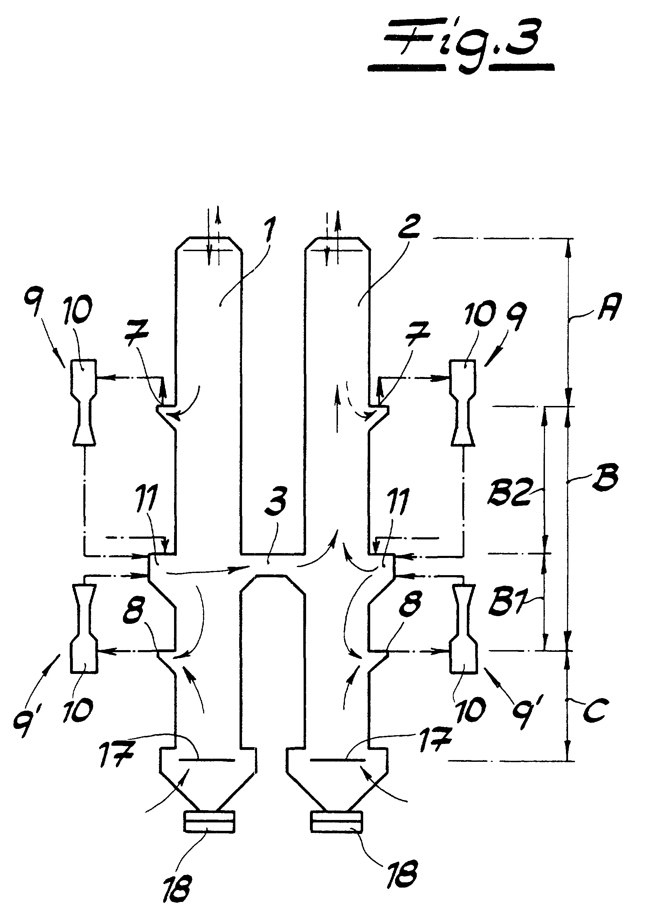

Auch im Ausführungsbeispiel der Fig. 3 weisen beide Schächte 1, 2 eine Brennkammer 11 auf, die etwa auf der Höhe des Überströmkanals 3 am Umfang der Schächte 1, 2 angeordnet sind. Im Unterschied zu den zuvor beschriebenen Ausführungen werden die Brennkammern 11 sowie die der Kühlzone C zugeordneten Absaugeinrichtungen 9' stets gleichzeitig betrieben. Die Brennkammern 11 werden mit Brennstoff sowie jeweils einem Teilstrom der in der Vorwärmzone A des ersten Schachtes 1 erwärmten Verbrennungsluft beaufschlagt. Ein Teil der aus den Brennkammern 11 in die Schächte 1, 2 eingeleiteten Verbrennungsgase durchströmt eine Gleichstrom-Brennzone B1 des betreffenden Schachtes 1 oder 2 unterhalb des Überströmkanals 3 im Gleichstrom zur Bewegungsrichtung des Brenngutes und wird mit einem in der Kühlzone C erwärmten Kühlluftstrom unterhalb des Überströmkanals C aus dem Schacht abgezogen und in die an den Schacht angeschlossene Brennkammer 11 zurückgeführt. In beiden Schächten 1, 2 ist also immer eine Gleichstrom-Brennzone B1 vorhanden, in der das Brenngut durch einen in der Bewegungsrichtung des Brenngutes geführten Gasstrom gebrannt wird. Der andere Teil des Verbrennungsgases durchströmt eine Gegenstrom-Brennzone B2 des zweiten Schachtes 2 im Gegenstrom zur Bewegungsrichtung des Brenngutes und verläßt den Schacht 2 am kopfseitigen Ausgang. In gewissen Zeitintervallen werden nur die Klappen an den Schächten 1, 2 umgesteuert. Nach dem Umschalten wird die Verbrennungsluft der Vorwärmzone A des Schachtes 2 erwärmt und wird das Abgas am Kopf des Schachtes 1 abgezogen.

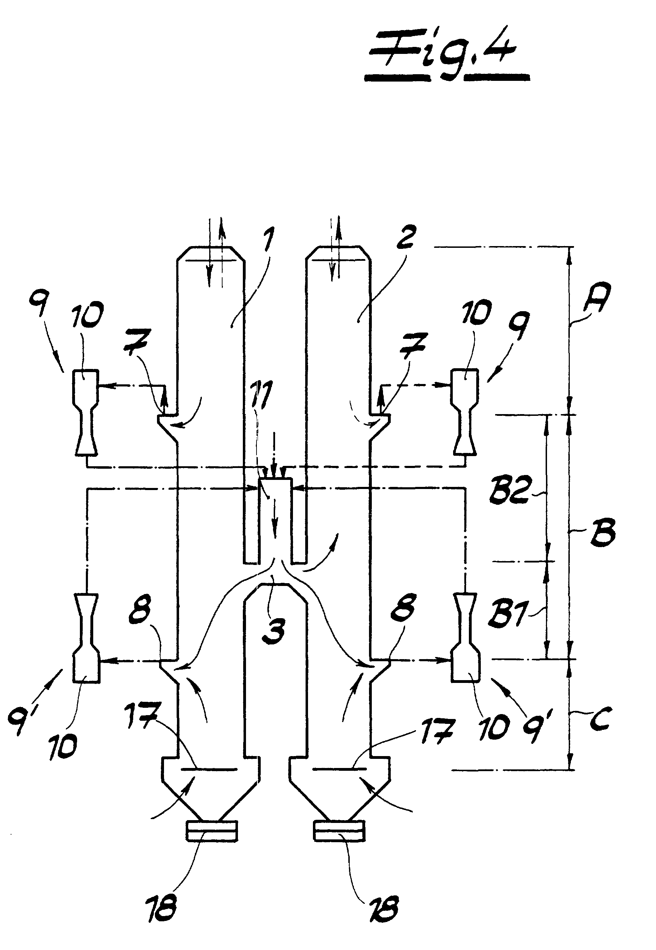

Im Ausführungsbeispiel der Fig. 4 ist an den Überströmkanal 3 eine Brennkammer 11 angeschlossen, die durch Absaugeinrichtungen 9, 9' mit oberhalb und unterhalb des Überströmkanals 3 angeordneten Gasaustrittsöffnungen beider Schächte 1 und 2 verbunden ist. Die in der Vorwärmzone A des ersten Schachtes 1 erwärmte Verbrennungsluft wird mit Brennstoff der an den Überströmkanal 3 angeschlossenen Brennkammer 11 zugeführt. Ein Teil des aus der Brennkammer 11 austretenden Verbrennungsgases durchströmt in beiden Schächten 1 und 2 eine Gleichstrom-Brennzone B1 unterhalb des Überströmkanals 3 im Gleichstrom zur Bewegungsrichtung des Brenngutes und wird mit einem in der Kühlzone C erwärmten Kühlluftstrom unterhalb des Überströmkanals 3 aus den Schächten 1, 2 abgezogen und in die Brennkammer 11 zurückgeführt. Der andere Teil des Verbrennungsgases durchströmt eine Gegenstrom-Brennzone B2 des zweiten Schachtes 2 entgegen der Bewegungsrichtung des Brenngutes. In gewissen Zeitabständen werden nur die Klappen am oberen Ende der Schächte 1, 2 umgesteuert, so daß nach Ablauf der Brennperiode die Verbrennungsluft von Schacht 1 auf Schacht 2 umgestellt wird und das Abgas, das vorher Schacht 2 verließ, jetzt aus dem Schacht 1 ausströmt.

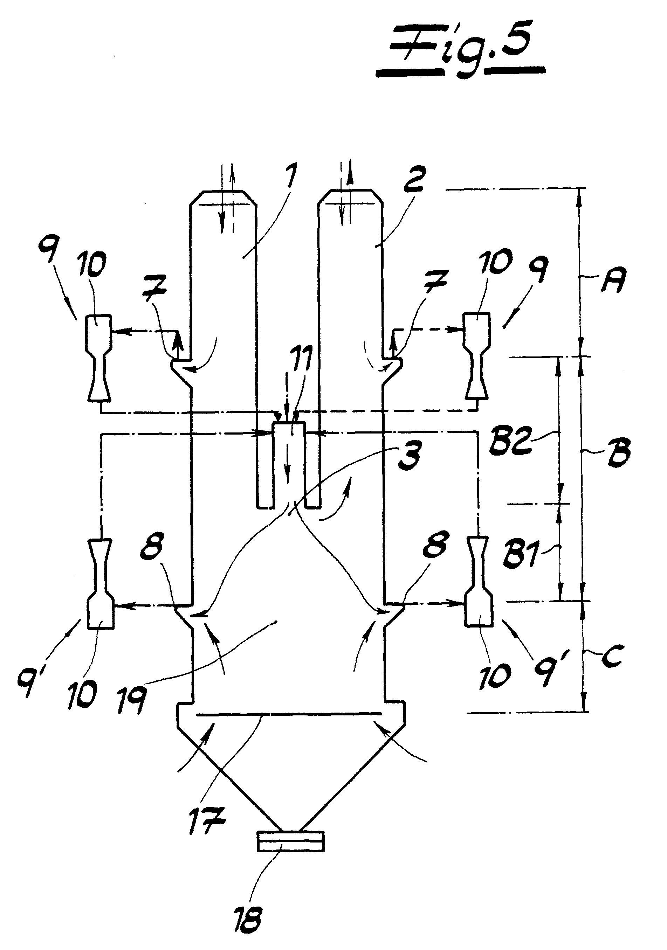

Im Ausführungsbeispiel der Fig. 5 weisen die Schächte 1, 2 einen gemeinsamen Kühlschacht 19 auf, der die Kühlzone C und oberhalb der Kühlzone C eine von Verbrennungsgas im Gleichstrom zur Bewegungsrichtung des Brenngutes durchströmte Gleichstrom-Brennzone B1 enthält. Ferner weisen die Schächte 1, 2 am unteren Ende ihrer Vorwärmzone A und der Kühlschacht 19 am oberen Ende der Kühlzone C Gasaustrittsöffnungen 7, 8 auf, an die Absaugeinrichtungen 9, 9' angeschlossen sind. Die Absaugeinrichtungen 9, 9' sind mit einer mit Brennstoff gespeisten Brennkammer 11 verbunden, die an den Überströmkanal 3 angeschlossen ist und der Erzeugung des in die Brennzonen B eingeleiteten Verbrennungsgases dient. Es stellen sich die anhand der Fig. 4 bereits beschriebenen Strömungsverhältnisse ein.

## Patentansprüche

1. Verfahren zum Brennen von stückigem Brenngut, insbesondere von Kalkstein, Dolomit und Magnesit, in einem Regenerativschachtofen aus mindestens zwei Schächten (1, 2), die eine Vorwärmzone (A) sowie eine Brennzone (B) aufweisen und oberhalb einer Kühlzone (C) durch einen Überströmkanal (3) verbunden sind, wobei
Verbrennungsluft am Kopf eines Schachtes (1) aufgegeben, bei der Durchströmung der Vorwärmzone (A) von heißem Brenngut erwärmt und vor Eintritt in die Brennzone (B) mit Brennstoff zusammengebracht wird,
die Brennzone (3) des Schachtes (1) von Verbrennungsgas, das bei der Verbrennung des Brennstoffes entsteht, durchströmt wird,
Verbrennungsgas durch den Überströmkanal (3) in den Parallelschacht (2) geleitet wird und diesen von unten nach oben unter Wärmeabgabe an das im Parallelschacht (2) befindliche Brenngut durchströmt und
Kühlluft am unteren Ende des Schachtes (1) zugeführt und bei der Durchströmung der Kühlzone (C) von heißem, die Brennzone (B) verlassenden Brenngut erwärmt wird,
**dadurch gekennzeichnet,** daß die in der Vorwärmzone (A) erwärmte Verbrennungsluft und zumindest ein Teilstrom der in der Kühlzone (C) erwärmten Kühlluft aus dem Schacht (1) abgezogen und mit Brennstoff einer Brennkammer (11) zugeführt werden, in der das Verbrennungsgas für die Brennzone (B) erzeugt wird.

2. Verfahren nach Anspruch 1, dadurch gekennzeichnet, daß die erwärmte Verbrennungsluft und die erwärmte Kühlluft mit Injektoren (10) aus dem Schacht (1) abgesaugt und der Brennkammer (11) zugeführt werden und daß die Injektoren (10) mit einem vorgewärmten Treibgas betrieben werden.

3. Verfahren nach Anspruch 1 oder 2, dadurch gekennzeichnet, daß die Temperatur in der Brennkammer (11) durch den am oberen Ende der Kühlzone (C) abgesaugten Gasstrom geregelt wird.

4. Verfahren nach einem der Ansprüche 1 bis 3, dadurch gekennzeichnet, daß die der Vorwärmzone (A) zugeführte Verbrennungsluftmenge so eingestellt wird, daß das Luftverhältnis λ aus der dem Regenerativschachtofen insgesamt zugeführten Luftmenge und der für eine stöchiometrische Verbrennung des Brennstoffes benötigten Mindestluftmenge kleiner ist als 1,3.

5. Verfahren nach einem der Ansprüche 1 bis 4, dadurch gekennzeichnet, daß das Verbrennungsgas oberhalb des Überströmkanals (3) in den Schacht (1) eingeleitet wird und eine Brennzone (B) durchströmt, die von der an den Schacht (1) angeschlossenen Brennkammer (11) bis zum Überströmkanal (3) reicht.

6. Verfahren nach einem der Ansprüche 1 bis 4, dadurch gekennzeichnet, daß das Verbrennungsgas etwa auf der Höhe des Überströmkanals (3) eingeleitet wird, daß ein Verbrennungsgasteilstrom eine Gleichstrom-Brennzone (B1) des Schachtes (1) unterhalb des Überströmkanals (3) im Gleichstrom zur Bewegungsrichtung des Brenngutes durchströmt und mit der in der Kühlzone (C) erwärmten Kühlluft unterhalb des Überströmkanals (3) aus dem Schacht (1) abgezogen und in die Brennkammer (11) zurückgeführt wird und daß der andere Teil des Verbrennungsgases durch den Überströmkanal (3) in den Parallelschacht (2) gelangt und eine Gegenstrom-Brennzone (B2) des Parallelschachtes (2) im Gegenstrom zur Bewegungsrichtung des Brenngutes durchströmt.

7. Verfahren nach einem der Ansprüche 1 bis 4, dadurch gekennzeichnet, daß beide Schächte (1, 2) mit Brennkammern (11) ausgerüstet sind, die etwa auf der Höhe des Überströmkanals (3) an den Schacht (1, 2) angeschlossen sind und gleichzeitig mit Brennstoff sowie jeweils einem Teilstrom der in der Vorwärmzone (A) des ersten Schachtes (1) erwärmten Verbrennungsluft beaufschlagt werden, daß jeweils ein Teil der aus den Brennkammern (11) in die Schächte (1, 2) eingeleiteten Verbrennungsgase eine Gleichstrom-Brennzone (B1) des betreffenden Schachtes unterhalb des Überströmkanals (3) im Gleichstrom zur Bewegungsrichtung des Brenngutes durchströmt und mit einem in der Kühlzone (C) erwärmten Kühlluftstrom unterhalb des Überströmkanals (3) aus dem Schacht abgezogen und in die an den Schacht angeschlossene Brennkammer (11) zurückgeführt wird und daß der andere Teil des Verbrennungsgases eine Gegenstrom-Brennzone (B2) des zweiten Schachtes (2) im Gegenstrom zur Bewegungsrichtung des Brenngutes durchströmt.

8. Verfahren nach einem der Ansprüche 1 bis 4, dadurch gekennzeichnet, daß die in der Vorwärmzone (A) des ersten Schachtes (1) erwärmte Verbrennungsluft mit Brennstoff einer Brennkammer (11) zugeführt wird, die an den Überströmkanal (3) angeschlossen ist, daß ein Teil des aus der Brennkammer (11) austretenden Verbrennungsgases eine Gleichstrom-Brennzone (B1) unterhalb des Überströmkanals (3) im Gleichstrom zur Bewegungsrichtung des Brenngutes durchströmt und mit einem in der Kühlzone (C) erwärmten Kühlluftstrom unterhalb des Überströmkanals (3) abgezogen und in die Brennkammer (11) zurückgeführt wird und daß der andere Teil des Verbrennungsgases eine Gegenstrom-Brennzone (B2) des zweiten Schachtes (2) im Gegenstrom zur Bewegungsrichtung des Brenngutes durchströmt.

9. Regenerativschachtofen zur Durchführung des Verfahrens nach einem der Ansprüche 1 bis 8, mit
mindestens zwei Schächten (1, 2), die jeweils eine Vorwärmzone (A), eine von heißem Verbrennungsgas durchströmte Brennzone (B) und eine Kühlzone (C) aufweisen und oberhalb der Kühlzone (C) durch einen Überströmkanal (3) verbunden sind,
wechselweise schaltbaren Einrichtungen (4, 5) oberhalb der Vorwärmzone (A) beider Schächte (1, 2) für die Zuführung von Verbrennungsluft und den Abzug von Abgas und
Einrichtungen (6) unterhalb der Kühlzone (C) beider Schächte (1, 2) für die Zuführung von Kühlluft,
**dadurch gekennzeichnet,** daß die Schächte (1, 2) am unteren Ende der Vorwärmzone (A) und am oberen Ende der Kühlzone (C) Gasaustrittsöffnungen (7, 8) aufweisen, an die Absaugeinrichtungen (9, 9') angeschlossen sind, und daß die Absaugeinrichtungen (9, 9') mit mindestens einer mit Brennstoff gespeisten Brennkammer (11) zur Erzeugung des in die Brennzonen (B) eingeleiteten Verbrennungsgases verbunden sind.

10. Regenerativschachtofen nach Anspruch 9, dadurch gekennzeichnet, daß beide Schächte (1, 2) eine Brennkammer (11) aufweisen, die oberhalb des Überströmkanals (3) am Umfang der Schächte (1, 2) angeordnet ist.

11. Regenerativschachtofen nach Anspruch 9, dadurch gekennzeichnet, daß beide Schächte (1, 2) eine Brennkammer (11) aufweisen, die etwa auf der Höhe des Überströmkanals (3) am Umfang der Schächte (1, 2) angeordnet ist und durch Absaugeinrichtungen (9, 9') mit oberhalb und unterhalb des Überströmkanals angeordneten Gasaustrittsöffnungen (7, 8) der Schächte (1, 2) verbunden ist.

12. Regenerativschachtofen nach Anspruch 9, dadurch gekennzeichnet, daß an den Überströmkanal (3) eine Brennkammer (11) angeschlossen ist, die durch Absaugeinrichtungen (9, 9') mit oberhalb und unterhalb des Überströmkanals (3) angeordneten Gasaustrittsöffnungen (7, 8) beider Schächte (1, 2) verbunden ist.

13. Regenerativschachtofen zur Durchführung des Verfahrens nach einem der Ansprüche 1 bis 8, mit
mindestens zwei Schächten (1, 2), die eine Vorwärmzone (A) sowie eine von heißem Verbrennungsgas durchströmte Brennzone (B) aufweisen und oberhalb einer Kühlzone (C) durch einen Überströmkanal (3) verbunden sind,
wechselweise schaltbaren Einrichtungen (4, 5) oberhalb der Vorwärmzone (A) beider Schächte (1, 2) für die Zuführung von Verbrennungsluft und den Abzug von Abgas und
Einrichtungen (6) unterhalb der Kühlzone (C) für die Zuführung von Kühlluft,
**dadurch gekennzeichnet,** daß die Schächte (1, 2) einen gemeinsamen Kühlschacht (19) aufweisen, der die Kühlzone (C) und oberhalb der Kühlzone (C) eine von Verbrennungsgas im Gleichstrom zur Bewegungsrichtung des Brenngutes durchströmte Gleichstrom-Brennzone (B1) enthält, daß die Schächte (1, 2) am unteren Ende ihrer Vorwärmzone (A) und der Kühlschacht (19) am oberen Ende der Kühlzone (C) Gasaustrittsöffnungen (7, 8), an die Absaugeinrichtungen (9, 9') angeschlossen sind, und daß die Absaugeinrichtungen (9, 9') mit einer mit Brennstoff gespeisten Brennkammer (11) verbunden sind, die an den Überströmkanal (3) angeschlossen ist und der Erzeugung des in die Brennzonen (B) eingeleiteten Verbrennungsgases dient.

14. Regenerativschachtofen nach einem der Ansprüche 9 bis 13, dadurch gekennzeichnet, daß die Absaugeinrichtungen (9, 9') Injektoren (10) aufweisen, die mit einem vorgewärmten Treibgas gespeist sind.

## Claims

1. A process for calcining calcination stock in lump form, particularly limestone, dolomite and magnesite, in a regenerative shaft kiln comprising at least two shafts (1, 2) which have a preheating zone (A) and a calcination zone (B) and which are connected above a cooling zone (C) by an overflow conduit (3), wherein
combustion air is fed to the top of one shaft (1), is heated as it flows through the preheating zone (A) by hot calcination stock, and is combined with fuel before it enters the calcination zone (B),
combustion gas which is formed during the combustion of the fuel flows through the calcination zone (3) of the shaft (1),
combustion gas is led through the overflow conduit (3) into the parallel shaft (2) and flows through the latter from bottom to top with the transfer of heat to the calcination stock which is situated in the parallel shaft (2), and
cooling air is fed to the bottom end of the shaft (1) and is heated as it flows through the cooling zone (C) by hot calcination stock leaving the calcination zone (B),
characterised in that the combustion air which is heated in the preheating zone (A) and at least a partial stream of the cooling air which is heated in the cooling zone (C) are taken off from the shaft (1) and are fed with fuel to a combustion chamber (11) in which the combustion gas for the calcination zone (B) is produced.

2. A process according to claim 1. characterised in that the heated combustion air and the heated cooling air are withdrawn by suction from the shaft (1) by injectors (10) and are fed to the combustion chamber (11), and that the injectors (10) are operated with a preheated propellant gas.

3. A process according to claims 1 or 2, characterised in that the temperature in the combustion chamber (11) is controlled by the gas stream which is removed by suction at the top end of the cooling zone (C).

4. A process according to any one of claims 1 to 3, characterised in that the amount of combustion air fed to the preheating zone (A) is adjusted so that the air ratio λ defined as the ratio of the total amount of air fed to the regenerative shaft kiln to the minimum amount of air necessary for stoichiometric combustion of the fuel is less than 1.3.

5. A process according to any one of claims 1 to 4, characterised in that the combustion gas is introduced into the shaft (1) above the overflow conduit (3) and flows through a calcination zone (B) which extends from the combustion chamber (11) attached to the shaft (1) as far as the overflow conduit (3).

6. A process according to any one of claims 1 to 4, characterised in that the combustion gas is introduced at about half the height of the overflow conduit (3), that a partial stream of combustion gas flows through a co-current calcination zone (B1) of the shaft (1) below the overflow conduit (3), co-current to the direction of movement of the calcination stock, and is taken off from the shaft (1), with the cooling air which is heated in the cooling zone (C), below the overflow conduit (3) and is fed back to the combustion chamber (11), and that the other part of the combustion gas enters the parallel shaft (2) through the overflow conduit (3) and flows through a counter-current calcination zone (B2) of the parallel shaft (2), counter-current to the direction of movement of the calcination stock.

7. A process according to any one of claims 1 to 4, characterised in that both shafts (1, 2) are equipped with combustion chambers (11), which are attached to the shafts (1, 2) at about the height of the overflow conduit (3) and are each fed simultaneously with fuel and with a partial stream of the combustion air which is heated in the preheating zone (A) of the first shaft (1), that one part of the combustion gases which are introduced in each case from the combustion chambers (11) into the shafts (1, 2) flows through a co-current calcination zone (B1) of the shaft concerned, below the overflow conduit (3), co-current to the direction of movement of the calcination stock, and is taken off from the shaft, with a cooling air stream which is heated in the cooling zone (C), below the overflow conduit (3) and is fed back to the combustion chamber (11) attached to the shaft, and that the other part of the combustion gas flows through a counter-current calcination zone (B2) of the second shaft (2), counter-current to the direction of movement of the calcination stock.

8. A process according to any one of claims 1 to 4, characterised in that the combustion air which is heated in the preheating zone (A) of the first shaft (1) is fed with fuel to a combustion chamber (11) which is attached to the overflow conduit (3), that one part of the of the combustion gas emerging from the combustion chamber (11) flows through a co-current calcination zone (B1) below the overflow conduit (3), co-current to the direction of movement of the calcination stock, and is taken off, with a cooling air stream which is heated in the cooling zone (C), below the overflow conduit (3) and is fed back to the combustion chamber (11), and that the other part of the combustion gas flows through a counter-current calcination zone (B2) of the second shaft (2), counter-current to the direction of movement of the calcination stock.

9. A regenerative shaft kiln for carrying out the process according to any one of claims 1 to 8, comprising
at least two shafts (1, 2), which each comprise a preheating zone (A), a calcination zone (B) through which hot combustion gas flows, and a cooling zone (C), and which are connected above the cooling zone (C) by an overflow conduit (3),
devices (4, 5), which can be connected alternately above the preheating zones (A) of both shafts (1, 2), for the supply of combustion air and for the take-off of waste gas, and
devices (6) below the cooling zones (C) of both shafts (1, 2) for the supply of cooling air,
characterised in that at the bottom end of the preheating zone (A) and at the top end of the cooling zone (C) the shafts (1, 2) have gas outlet openings (7, 8) to which suction devices (9, 9') are connected, and that the suction devices (9, 9') are connected to at least one combustion chamber (11) which is supplied with fuel for the production of the combustion gas which is introduced into the calcination zones (B).

10. A regenerative shaft kiln according to claim 9, characterised in that both shafts (1, 2) comprise a combustion chamber (11) which is disposed above the overflow conduit (3) at the periphery of the shafts (1, 2).

11. A regenerative shaft kiln according to claim 9, characterised in that both shafts (1, 2) comprise a combustion chamber (11), which is disposed at about the height of the overflow conduit (3) at the periphery the shafts (1, 2) and which is connected by suction devices (9, 9') to gas outlet openings (7, 8) of the shafts (1, 2) which are disposed above and below the overflow conduit.

12. A regenerative shaft kiln according to claim 9, characterised in that a combustion chamber (11) is attached to the overflow conduit (3), and is connected by suction devices (9, 9') to gas outlet openings (7, 8) of both shafts (1, 2) which are disposed above and below the overflow conduit (3).

13. A regenerative shaft kiln for carrying out the process according to any one of claims 1 to 8, comprising
at least two shafts (1, 2), which comprise a preheating zone (A) and a calcination zone (B) through which hot combustion gas flows and which are connected above a cooling zone (C) by an overflow conduit (3),
devices (4, 5) which can be connected alternately above the preheating zone (A) of both shafts (1, 2) for the supply of combustion air and for the take-off of waste gas, and
devices (6) below the cooling zone (C) for the supply of cooling air,
characterised in that the shafts (1, 2) have a common cooling shaft (19) which contains the cooling zone (C) and which , above the cooling zone (C), contains a co-current calcination zone (B1) through which combustion gas flows, co-current to the direction of movement of the calcination stock, that the shafts (1, 2) have gas outlet openings (7, 8) at the bottom end of their preheating zone (A) and the cooling shaft (19) has gas outlet openings (7, 8) at the top end of the cooling zone (C), to which gas outlet openings suction devices (9, 9') are attached, and that the suction devices (9, 9') are connected to a combustion chamber (11) which is supplied with fuel, which is attached to the overflow conduit (3), and which is employed for the production of the combustion gas which is introduced into the calcination zones (B).

14. A regenerative shaft kiln according to any one of claims 9 to 13, characterised in that the suction devices (9, 9') comprise injectors (10) which are supplied with a preheated propellant gas.

## Revendications

1. Procédé pour calciner une charge calcinable en morceaux, en particulier du calcaire, de la dolomite et de la magnésite, dans un four à cuves à récupération constitué d'au moins deux cuves (1, 2) qui comportent une zone de préchauffage (A) ainsi qu'une zone de calcination (B) et qui sont reliées par un canal de décharge (3) au-dessus d'une zone de refroidissement (C),
de l'air de combustion étant fourni au niveau du gueulard de l'une des cuves (1), étant chauffé par de la charge calcinable chaude en traversant la zone de préchauffage (A) et étant mis en présence de combustible avant de pénétrer dans la zone de calcination (B),
la zone de calcination (B) de la cuve (1) étant traversée par du gaz de combustion qui est généré lors de la combustion du combustible,
du gaz de combustion étant conduit à travers le canal de décharge (3) à la cuve parallèle (2) et traversant celle-ci de bas en haut en cédant de la chaleur à la charge calcinable placée dans la cuve parallèle (2), et
de l'air de refroidissement étant admis à l'extrémité inférieure de la cuve (1) et étant chauffé, en traversant la zone de refroidissement (C), par de la charge calcinable chaude qui quitte la zone de calcination (B),
caractérisé en ce que l'air de combustion chauffé dans la zone de préchauffage (A) et au moins un courant partiel de l'air de refroidissement chauffé dans la zone de refroidissement (C) sont prélevés dans la cuve (1) et admis avec du combustible dans une chambre de combustion (11) où est produit le gaz de combustion destiné à la zone de calcination (B).

2. Procédé selon la revendication 1, caractérisé en ce que l'air de combustion chauffé et l'air de refroidissement chauffé sont aspirés hors de la cuve (1) par des injecteurs (10) et admis dans la chambre de combustion (11), et en ce que les injecteurs (10) sont actionnés par un gaz propulseur préchauffé.

3. Procédé selon la revendication 1 ou 2, caractérisé en ce que la température dans la chambre de combustion (11) est régulée par le courant gazeux aspiré à l'extrémité supérieure de la zone de refroidissement (C).

4. Procédé selon l'une des revendications 1 à 3, caractérisé en ce que la quantité d'air de combustion admise dans la zone de préchauffage (A) est choisie pour que le rapport d'air λ entre la quantité d'air totale admise dans le four à cuves à récupération et la quantité d'air minimale nécessaire à une combustion stoechiométrique du combustible soit inférieur à 1,3.

5. Procédé selon l'une des revendications 1 à 4, caractérisé en ce que le gaz de combustion est introduit dans la cuve (1) au-dessus du canal de décharge (3) et traverse une zone de calcination (B) qui s'étend depuis la chambre de combustion (11) communiquant avec la cuve jusqu'au canal de décharge (3).

6. Procédé selon l'une des revendications 1 à 4, caractérisé en ce que le gaz de combustion est introduit sensiblement à la hauteur du canal de décharge (3), en ce qu'un courant partiel de gaz de combustion traverse une zone de calcination à co-courant (B1) de la cuve (1) au-dessous du canal de décharge (3) dans le même sens que la direction de déplacement de la charge calcinable, est prélevé dans la cuve (1) au-dessous du canal de décharge (3) avec l'air de refroidissement chauffé dans la zone de refroidissement (C) et est réadmis dans la chambre de combustion (11), et en ce que l'autre partie du gaz de combustion parvient à travers le canal de décharge (3) à la cuve parallèle (2) et traverse une zone de calcination à contre-courant (B2) de la cuve parallèle (2) dans le sens inverse à la direction de déplacement de la charge calcinable.

7. Procédé selon l'une des revendications 1 à 4, caractérisé en ce que les deux cuves (1, 2) sont équipées de chambres de combustion (11) qui communiquent avec la cuve (1, 2) sensiblement à la hauteur du canal de décharge (3) tout en étant alimentées par du combustible et chacune par un courant partiel de l'air de combustion chauffé dans la zone de préchauffage (A) de la première cuve (1), en ce qu'une partie des gaz de combustion introduits dans chacune des cuves (1, 2) à partir des chambres de combustion (11) traverse une zone de calcination à co-courant (B1) de la cuve concernée au-dessous du canal de décharge (3) dans le même sens que la direction de déplacement de la charge calcinable et est prélevée dans la cuve au-dessous du canal de décharge (3) avec un courant d'air de refroidissement chauffé dans la zone de refroidissement (C) et réadmise dans la chambre de combustion (11) communiquant avec la cuve, et en ce que l'autre partie du gaz de combustion traverse une zone de calcination à contre-courant (B2) de la seconde cuve (2) dans le sens inverse à la direction de déplacement de la charge calcinable.

8. Procédé selon l'une des revendications 1 à 4, caractérisé en ce que l'air de combustion chauffé dans la zone de préchauffage (A) de la première cuve (1) est admis avec du combustible dans une chambre de combustion (11) qui communique avec le canal de décharge (3), en ce qu'une partie du gaz de combustion sortant de la chambre de combustion (11) traverse une zone de calcination à co-courant (B1) au-dessous du canal de décharge (3) dans le même sens que la direction de déplacement de la charge calcinable et est prélevée au-dessous du canal de décharge (3) avec un courant d'air de refroidissement chauffé dans la zone de refroidissement (C) et réadmise dans la chambre de combustion (11), et en ce que l'autre partie du gaz de combustion traverse une zone de calcination à contre-courant (B2) de la seconde cuve (2) dans le sens inverse à la direction de déplacement de la charge calcinable.

9. Four à cuves à récupération pour mettre en oeuvre le procédé selon l'une des revendications 1 à 8, comprenant
au moins deux cuves (1, 2) qui comportent chacune une zone de préchauffage (A), une zone de calcination (B) traversée par du gaz de combustion chaud et une zone de refroidissement (C), et qui communiquent au-dessus de la zone de refroidissement (C) par un canal de décharge (3),
des dispositifs commutables en alternance (4, 5) au-dessus de la zone de préchauffage (A) des deux cuves (1, 2) pour l'admission d'air de combustion et l'extraction de gaz brûlés et
des dispositifs (6) au-dessous de la zone de refroidissement (C) des deux cuves (1, 2) pour l'admission d'air de refroidissement,
caractérisé en ce que les cuves (1, 2) comportent, à l'extrémité inférieure de la zone de préchauffage (A) et à l'extrémité supérieure de la zone de refroidissement (C), des ouvertures de sortie de gaz (7, 8) auxquelles sont reliés des dispositifs d'aspiration (9, 9'), et en ce que les dispositifs d'aspiration (9, 9') sont reliés à au moins une chambre de combustion (11) alimentée en combustible pour produire le gaz de combustion introduit dans les zones de calcination (B).

10. Four à cuves à récupération selon la revendication 9, caractérisé en ce que les deux cuves (1, 2) comportent une chambre de combustion (il) qui est située au-dessus du canal de décharge (3) à la périphérie des cuves (1, 2).

11. Four à cuves à récupération selon la revendication 9, caractérisé en ce que les deux cuves (1, 2) comportent une chambre de combustion (11) qui est située à la périphérie des cuves (1, 2) sensiblement à la hauteur du canal de décharge (3) et sont reliées par des dispositifs d'aspiration (9, 9') à des ouvertures de sortie de gaz (7, 8) des cuves (1, 2) situées au-dessus et au-dessous du canal de décharge.

12. Four à cuves à récupération selon la revendication 9, caractérisé en ce qu'au canal de décharge (3) est reliée une chambre de combustion (11), laquelle communique par l'intermédiaire de dispositifs d'aspiration (9, 9') avec des ouvertures de sortie de gaz (7, 8) des deux cuves (1, 2) situées au-dessus et au-dessous du canal de décharge (3).

13. Four à cuves à récupération pour mettre en oeuvre le procédé selon l'une des revendications 1 à 8, comprenant
au moins deux cuves (1, 2) qui comportent une zone de préchauffage (A) ainsi qu'une zone de calcination (B) traversée par du gaz de combustion chaud et qui communiquent au-dessus d'une zone de refroidissement (C) par un canal de décharge (3),
des dispositifs commutables en alternance (4, 5) au-dessus de la zone de préchauffage (A) des deux cuves (1, 2) pour l'admission d'air de combustion et l'extraction de gaz brûlés et
des dispositifs (6) au-dessous de la zone de refroidissement (C) pour l'admission d'air de refroidissement,
caractérisé en ce que les cuves (1, 2) comportent une cuve de refroidissement commune (19) qui englobe la zone de refroidissement (C) et, au-dessus de la zone de refroidissement (C), une zone de calcination à co-courant (B1) traversée par du gaz de combustion dans le même sens que la direction de déplacement de la charge calcinable, en ce que les cuves (1, 2) et la cuve de refroidissement (19) sont pourvues, respectivement à l'extrémité inférieure de leur zone de préchauffage (A) et à l'extrémité supérieure de la zone de refroidissement (C), d'ouvertures de sortie de gaz (7, 8) auxquelles sont reliés des dispositifs d'aspiration (9, 9'), et en ce que les dispositifs d'aspiration (9, 9') communiquent avec une chambre de combustion (11), laquelle est alimentée en combustible, est reliée au canal de décharge (3) et sert à produire le gaz de combustion introduit dans les zones de calcination (B).

14. Four à cuves à récupération selon l'une des revendications 9 à 13, caractérisé en ce que les dispositifs d'aspiration (9, 9') comportent des injecteurs (10) qui sont alimentés par un gaz propulseur préchauffé.
